# EUROPEAN PATENT APPLICATION

(11) **EP 3 342 637 A1**
(43) Date of publication of application: **04.07.2018**
(21) Application number: 17209622.4
(22) Date of filing: 21.12.2017
(51) Int. Cl.: B60P 3/40, F03D 13/40

(54) **TRANSIT SUPPORT BRACKET FOR CYLINDRICAL TUBULAR STRUCTURE**

(30) Priority: 23.12.2016 US 201615389603
(71) Applicant: Time Marine, Inc., Conroe, TX 77304 (US)
(72) Inventor: STUART, William, Conroe, TX Texas 77304 (US); STUART, Peter W, Conroe, TX Texas 77304 (US); LILES, Joseph D, Conroe, TX Texas 77304 (US)
(74) Representative: Optimus Patents Limited

(57) **Abstract**

A transit bracket support system for tubulars (13) such as tower sections of a wind turbine includes a plurality of arcuately spaced slots (56, 57) in a support bracket (19) are adapted to closely receive a plurality of plug plates (36, 37) which include at least one aperture (2). The slots are formed to correspond to a flange provided on the tubulars and the aperture(s) in the plug plates are formed so as to correspond to holes (12) in the flange. Bolts and nuts are provided to secure the support bracket to the tubular. A plurality of brackets may be employed to provide for stacking of the tubulars during transit.

## Description

### I. BACKGROUND OF THE INVENTION

### a) Field of the Invention

This invention relates to a system for supporting cylindrical tubular structure for example sections of the support structure for wind turbines during transit.

### b) Description of Related Arts Invention

Support towers for wind turbines generally consist of plural sections of cylindrical tubular sections that have annular flanges with apertures that allow for on-site assembly. The individual sections are transported to the assembly site by ships, railcars, and or trucks. During transit it is necessary to secure the sections to the particular mode of transportation.

Currently brackets are used that include elongated slots through which bolts are placed. The bolts extend through the aperture in the annular flange of the tower sections and nuts are then attached to the bolts. A significant amount of torque for example up to sixty percent of the bolt material yield point is required to secure the bracket to the flange because the slots are formed to accommodate several different diameters of bolts. The amount of torque required increases the difficulty in assembly of the support brackets and may lead to failure of the bolts. It would be desirable to design a bracket and support system that did not require such a high level of torque to be applied to the bolt in order to secure the tower section to the bracket assembly and to allow a single bracket assembly to be modified to accommodate a plurality of tubular sizes.

### II. BRIEF SUMMARY OF THE INVENTION

The above described problem is overcome by the invention disclosed herein. A bracket is provided that includes a main body that includes upper and lower support surfaces and a vertical plate member extending between the upper and lower support surfaces. The plate includes a plurality of slots that are adapted to tightly receive a flange bolt plug plate that is pre-drilled to be used with a specified tower section that has a specified diameter and hole size in the circular flange. This considerably reduces the amount of torque required to secure the tower section to the bracket. The bolt may be tightened to a snug tightened condition which is attained with a few impacts of an impact wrench or the full efforts of a worker using an ordinary spud wrench.

According to the invention there is provided a support bracket for a tubular member comprising: a top portion, a bottom portion, a plate member having a plurality of arcuately spaced slots, said plate member extending between and attached to the top and bottom portions, and a plurality of plug plates having at least one aperture adapted to fit within the slots.

According to the invention there is also provided a bracket support system for tubulars comprising: a lower bracket having a top portion and a bottom portion, a plate having a plurality of radially spaced slots extending therethrough and connected to the upper and lower portion, a plurality of plug plates adapted to fit within the slots, the plug plates having at least one aperture, an end portion at each end of the lower bracket, the end portion including a socket for receiving a support post, and an upper bracket having a top portion and bottom portion , a plate having a plurality of radially spaced slots extending therethrough and connected to the upper and lower portions, a plurality of plug plates adapted to fit within the slots, the plug plates having at least one aperture, an end portion at each end of the upper bracket, each end portion including a socket for receiving a support post, and two support posts, adapted to positioned within the sockets of the lower and upper brackets.

A similar upper support bracket with an addition lower bracket can be used when it is desired to stack the tower sections as it will be discussed below.

The bracket system is a universal application in that individual flange bolt plug plates can be fabricated and selected for insertion into the slots according to the specific dimension of the section being transported.

### III. BRIEF DESCRIPTION OF SEVERAL VIEWS OF THE DRAWINGS

For a detailed description of the preferred embodiments of the invention, reference will now be made to the accompanying drawings in which:
Figure 1 is a front view of the lower left portion of a support bracket according to an embodiment of the invention.
Figure 2 is a front view of the lower right portion of a support bracket according to an embodiment of the invention.
Figure 3 is a front view of the upper left portion of a support bracket according to an embodiment of the invention.
Figure 4 is a front view of the upper right portion of a support bracket according to an embodiment of the invention.
Figure 5 is an exploded view of the lower bracket and the tubular structure.
Figure 6 is a front view of the lower bracket attached to the tubular structure.
Figure 7 is a cutout perspective view of the two top portions of the bracket attached to each other.
Figure 8 is a cross sectional view taken along line 8-8 of figure 6.
Figure 9 is an exploded view of the upper bracket and the tubular structure.
Figure 10 is a perspective view of the stacking arrangement for the tubular structure.
Figure 11 is a front view of a flange bolt plug plate according to an embodiment of the invention.
Figure 12 is a side view of the flange bolt plug plate shown in figure 11.

### IV. DETAILED DESCRIPTION OF THE INVENTION

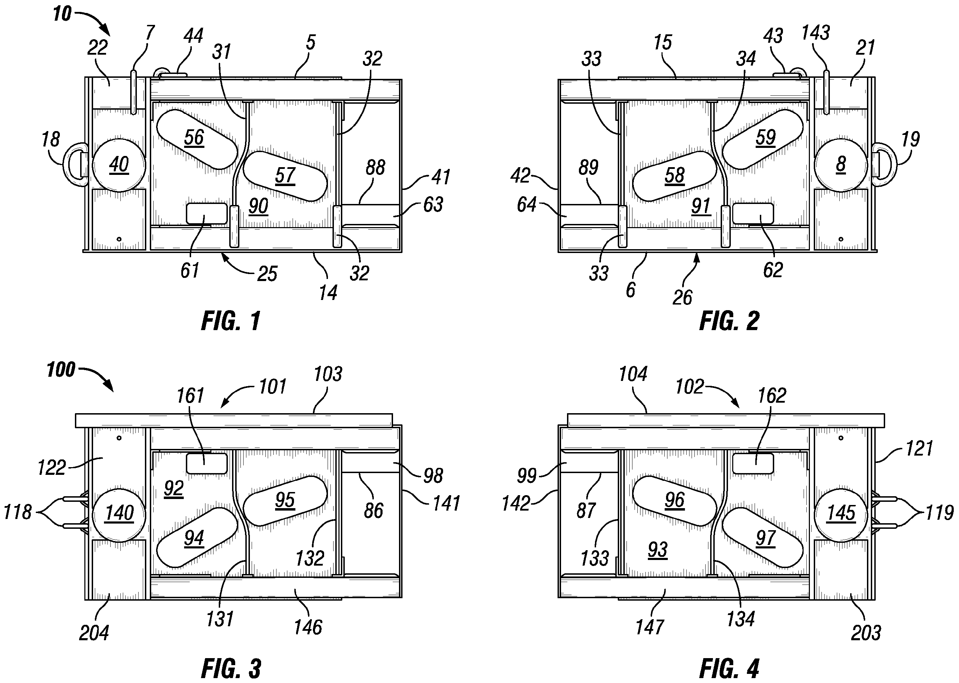

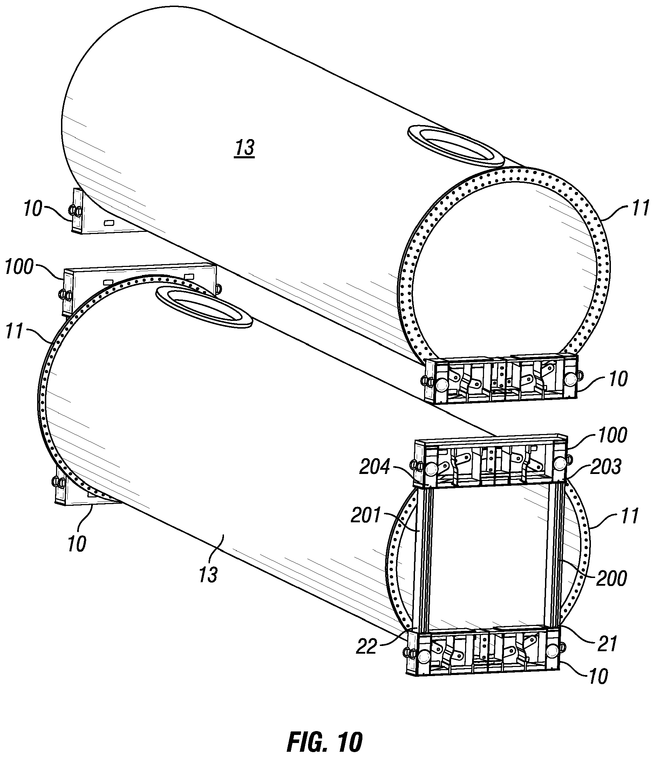

Figures 1-9 illustrates an embodiment of the invention as herein described. Figure 10 illustrates a stacking embodiment for two tubulars 13 which may be sections of a support column for a wind turbine. The system of figure 10 includes four lower brackets 10 and two upper brackets 100. The lower and upper brackets are secured to each other by a pair of support columns 200 and 201 which are adapted to be positioned within complimentary shaped sockets 21, 22 as shown in figures 1, 2 and 5 provided in the lower bracket 10 and sockets 203, 204 as shown in figure 3 and 4 provided in the upper bracket 100.

In a non-stacking embodiment, only two lower brackets need be utilized.

With reference to figure 1, the lower left portion 25 of the lower bracket 10 includes a top portion 5 and a bottom portion 14 which have generally planar surfaces. A first vertical plate 90 extends between top portion 5 and bottom portion 14 as shown in figure 1 and includes a plurality of arcuately spaced slots 56, 57.

Lower bracket portion 25 also includes a first hollow rectangular end portion 22 which is fixed to top portion 5, bottom portion 14 and plate 90. A second end plate 41 extends between and is secured to top portion 5 and bottom portion 14. A pair of reinforcing struts 31 and 32 also extend between upper and lower portions 5, 14 of the bracket.

A rectangular aperture 61 is formed in plate 90 and an opening 63 is formed by a horizontal reinforcing strut 88 which extends between reinforcing strut 32 and end member 41. Aperture 61 and opening 63 can be used as forklift pockets for handling.

Elements 5, 14, 90, 31, 32, 22, 88 and 41 are all secured together to form a unity bracket. A lashing trunnion 40 and lashing rings 18 and 7 are fixed to end member 22. A lashing ring 44 is secured to top portion 5.

As shown in figure 2, the lower right portion 26 of lower bracket 10 is essentially a mirror image of the lower left portion 25. In particular, it includes an upper portion 15, lower portion 6, plate 91 extending between top and bottom portion 15, 6, arcuately spaced slots 58, 59; rectangular end portion 21, end plate 42, reinforcing struts 33, 34, aperture 62, opening 64; lashing trunnion 8 and lashing rings 19 and 143. A lashing ring 43 is attached to top portion 15.

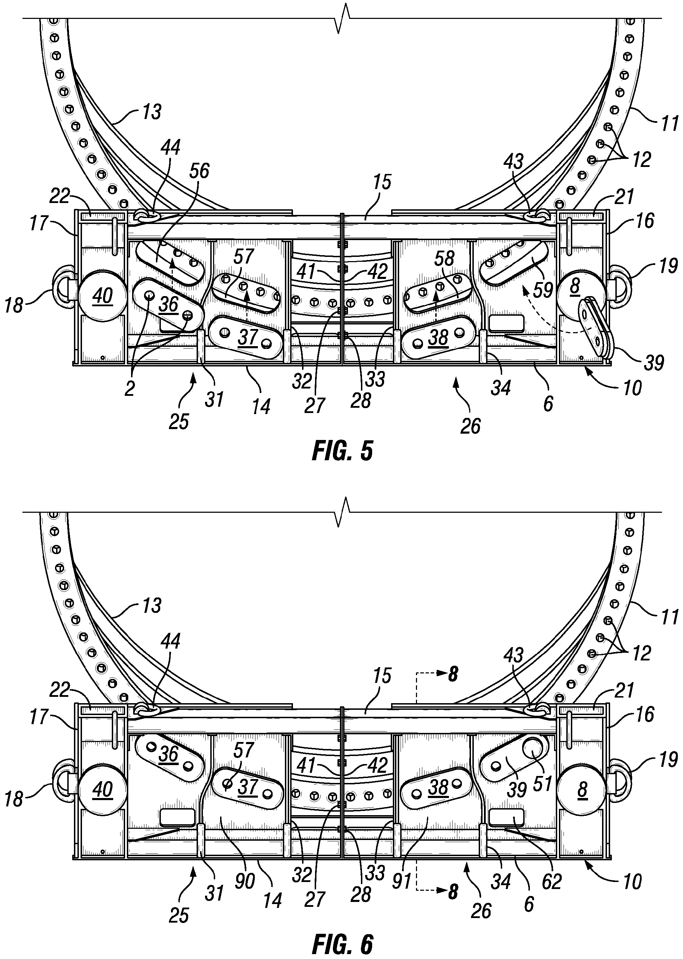

Bracket portions 25 and 26 are bolted together as shown in figure 5. A plurality of bolts 27 and nuts 28 extend through holes provided in end plates 41 and 42 to fasten the two portions together to form a complete unitary lower bracket assembly 10. The lower surfaces of bottom members 14 and 6 are planar so as to lie flat on a horizontal support surface to which it may be fixedly attached.

The initial dimensions of the lower bracket assembly are chosen such that the arcuately spaced slots line up with the plurality of holes 12 located in flange 11 of the tubular 13 as shown in figure 5 and 6.

To secure the tubular to the lower brackets, the tubular 13 is positioned by a lift for example so that a portion of the holes 12 in the bolt circle diameter line up with slots 56-59. A plurality of plug plates 36-39 are inserted into slots 56-59 as shown in figures 5 and 6 and include apertures 2 that are formed in plug plate to correspond and register with the particular hole pattern in flange 11 of the tubular 13 as shown in figures 5 and 6. In this manner support bracket assembly 10 is able to accommodate any one of the several sizes and patterns of the holes 12 that are currently being shipped.

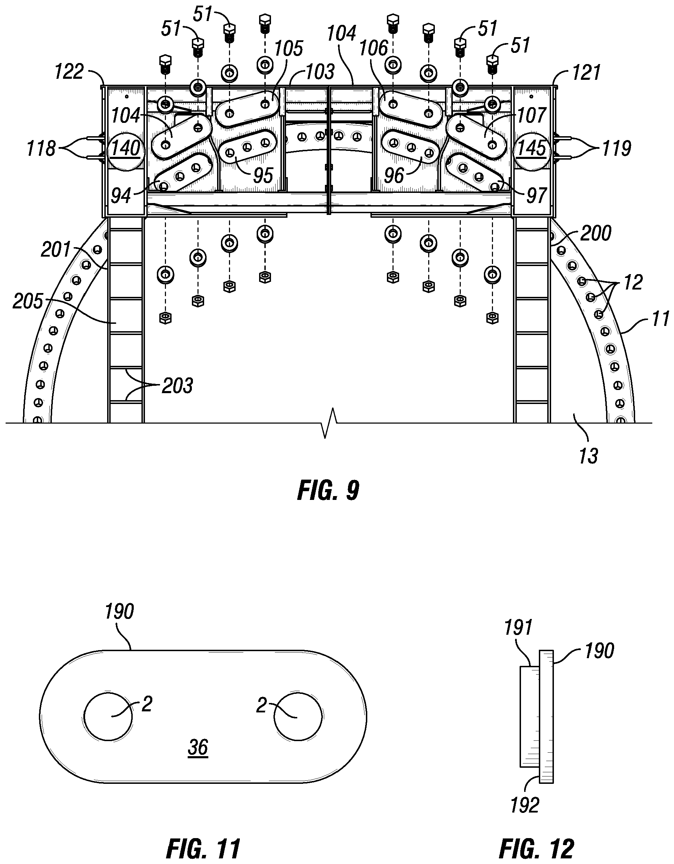

As shown in figure 11 each plug plate 36-39 includes a top flange 190 and a rearwardly extending annular wall 191 that is sized so as to generally correspond to the shape of slots 56-59. Thus the flange portion 192 will rest on the surface of plates 90, 91 while annular wall portion 191 will extend into plates 90 and 91 as shown in figure 6. Plug plates 36-39 may be shaped so as to snugly fit within the slots so that sidewalls 191 are in sliding contact with the interior walls of the slots.

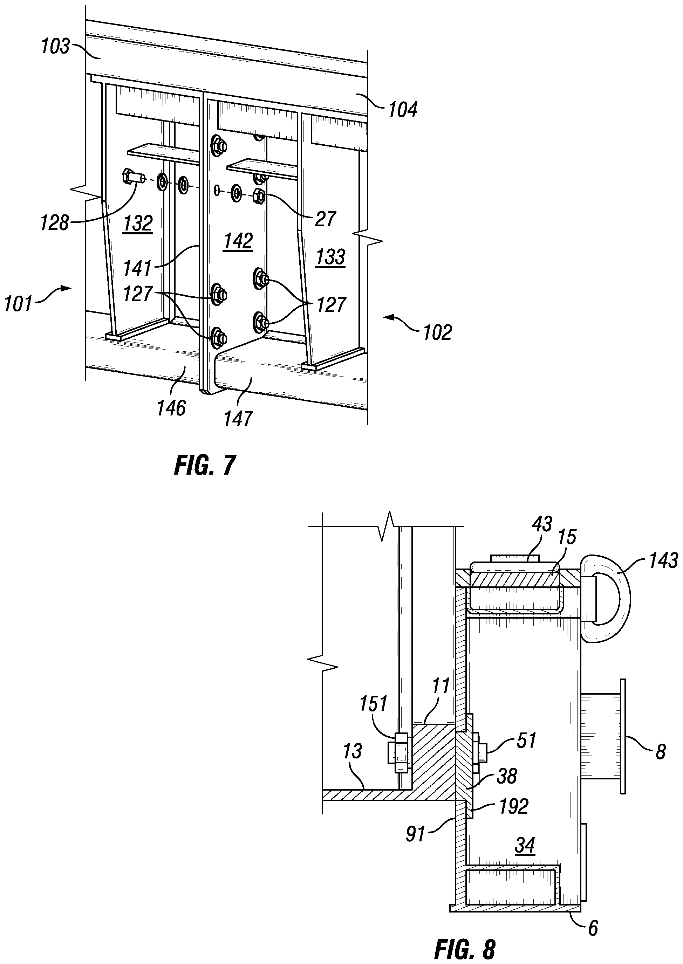

Once the plug plates are properly positioned, bolts 51 and nuts 151 as shown in figure 8 can be used to secure the tubular ends to each one of the lower supports brackets as shown in figure 10.

As shown in figure 8, top portion 15 and lower portion 6 of the brackets may be formed as hollow rectangular tubulars. Bolts 51 extends through hole 2 in plug plate and through a hole 12 in flange 11 of the tubular 13.

In order to permit stacking of the tubulars, two upper brackets as shown in figures 3 and 4 are attached to the upper portion of the tubular as shown in figure 9.

Upper bracket 100 is very similar in design to lower bracket 10 and includes two sections 101 and 102 as shown in figure 3 and 4 that are ultimately bolted together in the middle as shown in figure 7.

Upper left portion 101 as shown in figure 3 includes a top portion 103, a bottom portion 146, a vertical plate 92 having slots 94, 95, a hollow rectangular first end portion 122, a second end portion plate 141, a pair of reinforcing struts 131, 132, rectangular opening 161, an opening 98 formed by a horizontal reinforcing strut 86 which extending between second end portion 141 and reinforcing strut 132, a lashing trunnion 140, and lashing rings 118. All the structured elements are bonded together for example by welding to form a unitary structure.

As shown in figure 4, the right upper portion 102 of bracket 100 is a mirror image of the left upper portion 101 and includes a top portion 104, bottom portion 147, vertical plate 93 with, arcuately spaced slots 96, 97; a rectangular aperture 162 first in plate 93, vertical reinforcing struts 133, 134; a hollow rectangular second end portion 121, second end plate 142 and an opening 99 formed by a horizontal reinforcing strut 87 which extends between second end plate 142 and vertical reinforcing strut 133.

Upper right portion 102 also includes a lashing trunnion 145 and lashing rings 119.

As shown in figure 7, the two upper bracket portions 101 and 102 are secured together by bolts 128 and nuts 27 extending through end portions 141 and 142 to form a unitary assembly.

The upper bracket assembly 100 can now be secured to the upper portion of the tubular 13 in the manner shown in figure 9. Slots 94-97 are aligned with holes 12 in the flange 11 of tubular 13.

The matching plug plates 104-107 are placed in the slots so that apertures 2 in the plug plates are in alignment with holes 12. Nuts can now be placed through an aperture 2 in the plug plates, slots 94-97 and holes 12 in the manner similarly shown in figure 8.

Prior to this step the lower end of posts 200 and 201 are positioned within sockets 21, 22 of the lower bracket, and upper bracket 100 is placed so that the upper ends of posts 200 and 201 are positioned within sockets 203 and 204 as shown in figure 10.

Sockets 22 and 21 as shown in figure 6 extends to the bottom portions 14 and 6 of the lower bracket. In a similar manner sockets 204 and 203 of the upper bracket extend to the top portions 103 and 102 of the upper bracket as shown in figure 10.

As a result, the upper and lower ends of posts 200 and 201 extend to the top and bottom portions of the upper and lower brackets respectfully.

With upper and lower brackets 10, 100 secured to both ends of the tubular 13, a second tubular having lower brackets 10 attached to each end can be placed on top of the first tubular as shown in figure 10. If the tubular is tapered, then the upper tubular would be positioned so that opposite ends of the tubular would be placed over each other to even out the height of the stack. Cushing pads such as neoprene pads may be placed between upper and lower brackets in the stacked positon.

As shown in figure 11, each plug plate 36 includes a first planar member 190 and an inwardly extending wall portion 191 that extends entirely around plate 190 but is spaced from the perimeter of the planar member which forms a flange 192 that engages the surface of plates 90, 91, 92, 93 when the plug plate is positioned within the slots as shown in figure 8.

Although the present invention and its advantages have been described in detail, it should be understood that various changes, substitutions and alterations may be made herein without departing from the scope of the invention as defined by the appended claims.

## Claims

1. A support bracket (10, 100) for a tubular member (13) comprising:
a) a top portion (5, 15),
b) a bottom portion (14, 6),
c) a plate member (90,91,92,93) having a plurality of arcuately spaced slots (56,57,58,59,94,95,96,97), said plate member extending between and attached to the top and bottom portions, and
d) a plurality of plug plates (36,37,38,39,104,105,106,107) having at least one aperture (2) adapted to fit within the slots.

2. The support bracket of claims 1 further including first and second end portions secured to the top and bottom portions, said end portion including a socket (21, 22) adapted to receive a lower portion of a support post.

3. The support bracket of claim 1 further including a plurality of reinforcing struts (31,32,33,34,131,132,133,134) extending between the top and bottom portions.

4. The support bracket of claim 1 or claim 2 wherein the slots are radially spaced about the center of a tubular member (13) when supported by the bracket (10,100).

5. The support bracket of any preceding claim further including a plurality of bolts (51) and nuts (52) adapted to extend through the plug plates, slots, and apertures provided in a circumferential flange of the tubular.

6. The support bracket of any preceding claim wherein the support bracket includes left (25) and right (26) portions one of which is a mirror image of the other, said left and right portions being secured to each other.

7. A bracket support system for tubulars (13) comprising: a lower bracket (10) having a top portion (5) and a bottom portion (14), a plate (90, 91) having a plurality of radially spaced slots (56, 57, 58, 59) extending therethrough and connected to the upper and lower portion, a plurality of plug plates (36, 37, 38, 39) adapted to fit within the slots, the plug plates having at least one aperture (2), an end portion at each end of the lower bracket, the end portion including a socket (22) for receiving a support post (201, 202), and an upper bracket (100) having a top portion (103, 104) and bottom portion (146, 147), a plate (92, 93) having a plurality of radially spaced slots (94,95,96,97) extending therethrough and connected to the upper and lower portions, a plurality of plug plates (104,105,106,107) adapted to fit within the slots, the plug plates having at least one aperture (2), an end portion at each end of the upper bracket, each end portion including a socket for receiving a support post and two support posts (201,202), adapted to positioned within the sockets of the lower and upper brackets.

8. A bracket support system for tubulars as claimed in claim 7 wherein the slots in the lower (10) and upper (100) brackets are radially spaced to correspond to a circumferential flange located on the end of the tubular (13).

9. A bracket support system for tubulars as claimed in claim 7 or claim 8 including a second lower bracket (10) and a second upper bracket (10).

10. A bracket support system for tubulars (13) as claimed in any of claims 7 to 9 including a third and fourth lower bracket (10) adapted to rest on a top surface of the first and second upper brackets (100) respectively.

11. The support bracket of any of claims 1 to 6 wherein each plug plate (36,37,38,39,104, 105,106,107) includes a first planar member having an outer periphery and an inwardly extending wall portion that extends entirely around and spaced from the perimeter of the planar member thereby forming a flange.

12. The support bracket of claims 11 wherein the plug plates (36,37,38,39,104,105,106,107) are dimensioned so as to snugly fit within the slots.

13. The support bracket of claim 11 wherein the entire outer surface of the wall of the plug plates is in sliding contact which an inner surface of the slots.
